Europäisches Patentamt

European Patent Office

Office européen des brevets

(11) Veröffentlichungsnummer: **0 149 455 B1**

## (12) EUROPÄISCHE PATENTSCHRIFT

(45) Veröffentlichungstag der Patentschrift: **15.04.92**

(21) Anmeldenummer: **85100066.1**

(22) Anmeldetag: **03.01.85**

(51) Int. Cl.⁵: **B29C 33/64**, //B29L30:00

Die Akte enthält technische Angaben, die nach dem Eingang der Anmeldung eingereicht wurden und die nicht in dieser Patentschrift enthalten sind.

(54) **Gleit- und Formtrennmittel für die Reifenherstellung.**

(30) Priorität: **11.01.84 DE 3400668**

(43) Veröffentlichungstag der Anmeldung:
**24.07.85 Patentblatt 85/30**

(45) Bekanntmachung des Hinweises auf die
Patenterteilung:
**15.04.92 Patentblatt 92/16**

(84) Benannte Vertragsstaaten:
**DE FR GB IT NL**

(56) Entgegenhaltungen:
**DE-A- 1 644 969**
**DE-B- 1 228 361**
**US-A- 3 872 038**

(73) Patentinhaber: **Th. Goldschmidt AG**
**Goldschmidtstrasse 100 Postfach 101461**
**W-4300 Essen 1(DE)**

(72) Erfinder: **Kollmeier, Hans-Joachim, Dr.**
**Barkhorstrücken 27**
**W-4300 Essen(DE)**
Erfinder: **Lammerting, Helmut**
**Schweerstrasse 13**
**W-5812 Herbede(DE)**

**Beschreibung**

Die Erfindung betrifft ein Gleit- und Formtrennmittel für die Reifenherstellung auf der Basis einer wäßrigen Dispersion eines Siliconöles, welche Polyalkylenglykole, deren Ether, Polysiloxan-Polyoxyalkylen-Blockmischpolymerisate, Füllstoffe mit blättchenförmiger Struktur, Dispergierhilfsmittel und andere übliche Zusatzstoffe enthalten kann.

Bei der Herstellung von Reifen wird eine unvulkanisierte Rohkarkasse in eine Metallform eingelegt. Durch Aufblasen eines in den Innenraum der grünen Reifenkarkasse eingelegten Gummisackes wird der Reifen gegen die Form gepreßt und durch Hitzeeinwirkung vulkanisiert. Der Gummisack muß beim Aufblasen in der Reifenkarkasse gleiten und nach der Vulkanisation der Gummimischung von dem Reifen getrennt werden können. Für diese Zwecke verwendet man ölige Gleit- und Formtrennmittel, die auch als Sack- oder Rohlinggleitmittel bezeichnet werden.

Diese Gleit- und Formtrennmittel bestehen meistens aus einem Siliconöl, einem Polyalkylenglykol, Glimmer als Füllstoff mit blättchenförmiger Struktur und Dispergierhilfsmitteln. Sie können dabei in Form einer wäßrigen oder einer lösungsmittelhaltigen Zubereitung vorliegen. Derartige Zubereitungen sind z.B. in der DE-OS 19 49 618 beschrieben. Nach dieser DE-OS wird ein Gemisch verwendet, welches aus

| | |
|---|---|
| 2 bis 10 Gew.-% | flüssigen Dimethylpolysiloxanen mit einer Viskosität von mindestens 30 000 cSt/25°C, |
| 5 bis 20 Gew.-% | Ethylen- oder Propylenpolyglykolen oder Mischpolymerisaten hiervon, mit einem Molekulargewicht von mindestens 1000, |
| 25 bis 50 Gew.-% | Glimmer mit einer Korngröße von 160 bis 600 Siebmaschen, |
| 0,5 bis 5 Gew.-% | Bentonit-Ton und einer zur Bildung einer Gelstruktur und zur Verdickung der Mischung ausreichenden Menge eines hochpolaren Lösungsmittels, |
| 0,25 bis 5 Gew.-% | Lecithin und |
| 25 bis 55 Gew.-% | Kohlenwasserstofflösungsmittel mit einem Siedepunkt unterhalb von 200°C |

besteht.

In der DE-AS 21 25 948 ist ein wäßriges Siloxanschmiermittel für die Reifenformung beschrieben, bestehend aus

| | |
|---|---|
| A) 3 bis 40 Gew.-% | einer Mischung aus 1 bis 20 Gew.-% einer Alkylmethyl-Siloxanflüssigkeit mit einer Viskosität von wenigstens 10 000 cSt/25°C, bezogen auf das Gewicht des gesamten Mittels, und 2 bis 20 Gew.-%, bezogen auf das Gewicht des gesamten Mittels, eines Polyalkylenglykols mit einem Molekulargewicht von wenigstens 1000, das ein Polyalkylenglykol ist, dessen Alkylenoxideinheiten aus Ethylenoxid, Propylenoxid oder aus Kombinationen derselben bestehen, oder dessen Alkylenoxideinheiten aus Ethylenoxid, Propylenoxid oder aus Kombinationen derselben mit Alkylmethylsiloxanen copolymerisiert sind, oder |
| B) 3 bis 40 Gew.-% | eines Copolymeren eines Alkylmethylsiloxans und eines Polyalkylenoxids, dessen Alkylenoxideinheiten aus Ethylenoxid, Propylenoxid oder aus Kombinationen derselben bestehen, wobei das Copolymere (B) eine Viskosität von wenigstens 10 000 cSt/25°C aufweist und 5 bis 50 Gew.-% des Alkylmethylsiloxans enthält, |
| C) 25 bis 50 Gew.-% | Glimmer mit einer Korngröße entsprechend Sieben mit lichten Maschenweiten von etwa 0,091 bis 0,021 mm, |
| D) 0,25 bis 5 Gew.-% | feinteiligem Magnesiumsilicat, |
| E) 0,1 bis 5 Gew.-% | Lecithin und aus |
| F) 15 bis 55 Gew.-% | Wasser. |

Aus der DE-PS 24 55 377 sind Trennmittelgemische auf der Basis von Organopolysiloxanen bekannt, wobei das Trennmittel die Lösung eines flüssigen Organopolysiloxans in einem organischen Lösungsmittel dispergiert enthält und wobei in dem organischen Lösungsmittel zusätzlich ein hochviskoses, nicht mehr fließfähiges Organopolysiloxan mit Plastizitätswerten von 80 bis 120 mm gelöst ist. Das Verhältnis von flüssigem Organopolysiloxan zu hochviskosem, nicht mehr fließfähigem Organopolysiloxan beträgt dabei 3 : 1 bis 25 : 1. Die gute Wirkung dieser Trennmittelgemische wird dabei auf die Anwesenheit des hochviskosen Organopolysiloxans zurückgeführt. Dabei sollen insbesondere Beschädigungen des vulkanisierten Reifens aufgrund von Schuppenbildung vermieden werden.

In der DE-A-1 644 969 ist ein Formfreigabemittel beschrieben, welches dadurch gekennzeichnet ist, daß es aus 70 bis 98 Gew.-% eines Organopolysiloxans, 2 bis 8 Gew.-% einer Siliconharzlösung mit einem Hydrolysegrad von 40 bis 70 % und einem metallorganischen Härtungsmittel besteht. Zur Herstellung der Siliconharze hydrolysiert und polymerisiert man vorzugsweise ein Gemisch aus Methyltrichlorsilan, Dime-

EP 0 149 455 B1

thyldichlorsilan und Propyltrichlorsilan in Anwesenheit von Wasser und Methanol unter Verwendung von Xylol als Lösungsmittel.

Dieses Gleit- und Formtrennmittel des Standes der Technik stellen bereits recht wirksame Mittel dar, die es gestatten, mit einem Gummisack 250 bis 350 Reifen herzustellen, wobei die Innenoberflächen der vulkanisierten Reifen weitgehend fehlerfrei sind.

Es besteht jedoch nach wie vor ein erhebliches Interesse daran, die Wirksamkeit der Gleit- und Formtrennmittel zu verbessern, deren Anwendungskonzentrationen zu verringern, das Herstellverfahren zu verbilligen, die Lebensdauer der Gummisäcke zu erhöhen und Produktionsausschuß durch fehlerhafte Oberflächen der Innenseiten der Reifen zu vermeiden.

Überraschenderweise wurde nun gefunden, daß die Eigenschaften der Gleit- und Formtrennmittel für den genannten Zweck verbessert werden, wenn in den in ihnen enthaltenen Siliconölen bestimmte Siliconharze gelöst sind.

Das erfindungsgemäße Gleit- und Formtrennmittel auf der Basis einer wäßrigen Siliconöldispersion ist deshalb dadurch gekennzeichnet, daß es, bezogen auf Siliconöl, 2 bis 40 Gew.-% eines im Siliconöl löslichen, festen Siliconharzes enthält, welches im wesentlichen aus $R_3SiO_{1/2}$- und $SiO_{4/2}$-Einheiten besteht, wobei R im polymeren Molekül gleich oder verschieden sein kann und ein Alkylrest mit 1 bis 4 Kohlenstoffatomen oder ein Phenylrest ist und 0,4 bis 4 Gew.-% an Siliciumatome gebundene Hydroxylgruppen aufweist.

Vorzugsweise enthält das erfindungsgemäße Gleit- und Formtrennmittel 5 bis 20 Gew.-% Siliconharz, bezogen auf Siliconöl.

Das erfindungsgemäße Trennmittel weist ein deutlich erhöhtes Druckbelastungsvermögen auf. Die Ursache dafür ist, daß die in dem Trennmittel enthaltene Wirksubstanz bei hoher mechanischer Beanspruchung während des Reifenherstellvorgangs einen stabileren Schmierfilm bildet und vom Gummisack bei dessen Aufblasen nicht weggedrückt wird. Hierdurch wird es möglich, die Gleit- und Formtrennmittel in einer nieddrigeren Menge anzuwenden, als es bisher in der Praxis üblich war.

Die im wesentlichen aus $R_3SiO_{1/2}$- und $SiO_{4/2}$-Einheiten bestehenden Harze werden auch als QM-Harze bezeichnet (W. Noll "Chemie und Technologie der Siliconharze", 2. Auflage, 1968, Seite 5). Sie können in aus dem Stand der Technik bekannter Weise durch Cohydrolyse und Cokondensation der entsprechenden mono- und tetrafunktionellen Halogen- oder Alkoxysilane hergestellt werden. Durch die Wahl der geeigneten Reaktionstemperatur, Begrenzung der verwendeten Menge Wasser sowie gegebenenfalls Verwendung von Lösungsmitteln werden dabei Harze erhalten, welche definierte SiOH-Gehalte haben.

Der Rest R ist dabei ein Alkylrest mit 1 bis 4 Kohlenstoffatomen, wie der Methyl-, Ethyl-, Propyl- oder Butylrest, wobei der Methylrest bevorzugt ist. Der Rest R kann auch ein Phenylrest sein. Die Bedeutung der Reste R kann dabei innerhalb des polymeren Moleküls unterschiedlich sein. Besonders bevorzugt sind aber die Methylsiliconharze.

Die Siliconharze haben vorzugsweise ein durchschnittliches Molekulargewicht von 600 bis 5000. Das Molekulargewicht kann gelchromatographisch bestimmt werden.

Die erfindungsgemäßen Gleit- und Formtrennmittel enthalten bis zu 20 Gew.-% flüssige Siliconöle, welche in der Regel Dimethylpolysiloxane einer Viskosität von 1000 bis 60 000 mPa.s sind.

Die Mittel können ferner bis zu 20 Gew.-% eines Polyalkylenglykols oder dessen Monoether enthalten. Die Polyalkylenglykole weisen dabei vorzugsweise ein Molekulargewicht von wenigstens 1000 auf und bestehen aus Oxyethylen- und/Oder Oxypropyleneinheiten.

Die Mittel können außerdem bis zu 20 Gew.-% Polyoxyalkylen-Polysiloxan-Blockmischpolymerisate enthalten, deren Molekulargewicht im allgemeinen zwischen 4000 und 16 000 liegt.

Die Füllstoffe, insbesondere Glimmer, Vermiculit, Talkum, Kaolin oder Graphit, sind in den Gleit- und Formtrennmitteln in einer Menge von 10 bis etwa 50 Gew.-% enthalten.

Die Stabilität der wäßrigen Dispersion kann durch Zusatz an sich bekannter Dispergierhilfsmittel verbessert werden. Es ist ebenfalls bekannt, den Gleit- und Formtrennmitteln Netzmittel zuzusetzen. Weitere übliche Zusatzstoffe sind z.B. Baktericide, um Schimmelbefall zu verhindern.

In den folgenden Beispielen werden die Herstellung der erfindungsgemäßen Mittel sowie die Eigenschaften dieser Mittel bei Erprobung unter Betriebsbedingungen beschrieben.

I. Herstellung von erfindungsgemäßen Gleit- und Formtrennmitteln

Beispiel 1

Es wird zunächst eine Emulsion, bestehend aus
25 Gew.-Teilen     Dimethylpolysiloxan,

3

| 5 Gew.-Teilen | Siliconharz, in Form einer 50 gew.-%igen Lösung in Xylol, |
| 20 Gew.-Teilen | Emulgator, |
| 50 Gew.-Teilen | Wasser |

dadurch hergestellt, daß man die Siliconharzlösung im Siliconöl verteilt, das Xylol abdestilliert, den Emulgator zusetzt und dann das Wasser langsam unter intensivem Rühren zumischt. Die entstehende Emulsion wird mit einem Homogenisator behandelt. Es entsteht eine feinteilige Emulsion.

Als Dimethylpolysiloxan wird ein Gemisch aus gleichen Gewichtsteilen eines Siloxans einer Viskosität von 350 mPa.s und eines Siloxans einer Viskosität von 60 000 mPa.s verwendet.

Als Siliconharz wird ein Harz, welches im wesentlichen aus $(CH_3)_3 SiO_{1/2}$- und $SiO_{4/2}$-Einheiten besteht, einen OH-Gehalt von 1,5 Gew.-% aufweist und ein mittleres Molekulargewicht von 1250 hat und teilkristallin ist, verwendet. Das Harz wird in gleichen Teilen Xylol als Hilfslösungsmittel gelöst.

Der Emulgator ist ein Gemisch von 50 Gew.-% eines Polysiloxan-Polyoxyalkylen-Blockmischpolerisates mit einem mittleren Molekulargewicht von 9400, dessen Polyoxyalkylenblock zu 70 Gew.-% aus Oxyethylen- und zu 30 Gew.-% aus Oxypropyleneinheiten besteht, und 50 Gew.-% eines Polyoxyethylen-Polyoxypropylen-Copolymerisates eines Molekulargewichtes von 2240 und einem Oxyethylengehalt von 40 Gew.-%.

Zur Herstellung einer gebrauchsfertigen erfindungsgemäßen Zubereitung werden in einem Rührgefäß 16 Gew.-Teile der oben beschriebenen Emulsion, 20 Gew.-Teile Glimmer mit einer mittleren Korngröße von 0,044 mm, 0,5 Gew.-Teile Carboxymethylcellulose und 63,5 Gew.-Teile Wasser gemischt. Es entsteht eine stabile Dispersion. Die Stabilität dieser Zubereitung wird in einer Zentrifuge bei 1000 U/Min. bestimmt. Nach 15 Min. werden weniger als 3 Vol.-% Flüssigkeit als obere Schicht beobachtet.

Beispiel 2

Analog Beispiel 1 wird aus folgenden Bestandteilen eine Voremulsion hergestellt:

| 14 Gew.-Teile | Dimethylpolysiloxan einer Viskosität von 350 mPa.s, |
| 14 Gew.-Teile | Dimethylpolysiloxan einer Viskosität von 60 000 mPa.s, |
| 2 Gew.-Teile | Siliconharz der Zusammensetzung gemäß Beispiel 1, jedoch mit 1,9 Gew.-% OH-Gruppen und einem Molekulargewicht von 1100, |
| 20 Gew.-Teile | Emulgator (Gemisch wie in Beispiel 1 beschrieben), |
| 50 Gew.-Teile | Wasser. |

Die gebrauchsfertige Dispersion wird gemäß Beispiel 1 erhalten.

Beispiel 3

10 Gew.-Teile der Voremulsion von Beispiel 1 werden mit 0,5 Gew.-Teilen Carboxymethylcellulose, 15 Gew.-Teilen Glimmer mit einer mittleren Korngröße von 0,06 mm und 74,5 Gew.-Teilen Wasser in einem Rührgefäß dispergiert. Die nach Beispiel 1 gemessene Stabilität der Dispersion ergibt nach Zentrifugieren eine Abscheidung von weniger als 2 Vol.-% Flüssigkeit.

Beispiel 4

Analog Beispiel 1 wird aus folgenden Bestandteilen eine Voremulsion hergestellt:

| 7,3 Gew.-Teile | Dimethylpolysiloxan einer Viskosität von 350 mPa.s, |
| 12,7 Gew.-Teile | Dimethylpolysiloxan einer Viskosität von 100 000 mPa.s, |
| 1,5 Gew.-Teile | Siliconharz der Zusammensetzung gemäß Beispiel 1, |
| 28,5 Gew.-Teile | Emulgator gemäß Beispiel 1, |
| 50,0 Gew.-Teile | Wasser. |

Die gebrauchsfertige Dispersion wird gemäß Beispiel 1 erhalten. Hierzu werden 30 Gew.-Teile Voremulsion, 33 Gew.-Teile Glimmer mit einer mittleren Korngröße von 0,044 mm, 0,5 Gew.-Teile Carboxymethylcellulose und 36,5 Gew.-Teile Wasser gemischt. Es entsteht eine stabile Emulsion. Wird die Dispersion in einer Zentrifuge bei 1000 U/Min. zentrifugiert, scheiden sich nach 15 Minuten weniger als 3 Vol.-% Flüssigkeit ab.

II. Anwendungstechnische Prüfung der erfindungsgemäßen Zubereitungen der Beispiele 1 bis 4

Die erfindungsgemäßen Zubereitungen der Beispiele 1 bis 3 werden bei der Vulkanisation von Pkw-Hochgeschwindigkeitsreifen, die Zubereitung gemäß Beispiel 4 bei der Vulkanisation von LKW-Reifen auf einer Bag-O-Matik-Anlage unter Betriebsbedingungen überprüft. Im Vergleich zu handelsüblichen Trennmitteln werden die in der nachgestellten Tabelle aufgeführten Ergebnisse erzielt.

| erfindungsgemäße Zubereitung von Beispiel | Trenn- und Gleitverhalten | Aufgesprühte Menge/Reifen | Anzahl der mit 1 Gummisack herstellbaren Reifen |
|---|---|---|---|
| 1 | gut | 12 g | 500 |
| 2 | sehr gut | 15 g | 500 |
| 3 | sehr gut | 15 g | 500 |
| 4 | sehr gut | 15 g | 500 |
| handelsübliches Produkt | befriedigend | 15 g | 350 |

Es zeigt sich, daß die erfindungsgemäßen Zubereitungen gegenüber dem Stand der Technik besonders hinsichtlich der Trennwirkung und Lebensdauer des Gummisackes beträchtliche Vorteile aufweisen.

## Patentansprüche

1. Gleit- und Formtrennmittel für die Reifenherstellung auf der Basis einer wäßrigen Dispersion eines Siliconöles, welche Polyalkylenglykole, deren Ether, Polysiloxan-Polyoxyalkylen-Blockmischpolymerisate, Füllstoffe mit blättchenförmiger Struktur, Dispergierhilfsmittel und andere übliche Zusatzstoffe enthalten kann, dadurch gekennzeichnet, daß es, bezogen auf Siliconöl, 2 bis 40 Gew.-% eines im Siliconöl löslichen, festen Siliconharzes enthält, welches im wesentlichen aus $R_3SiO_{1/2}$- und $SiO_{4/2}$-Einheiten besteht, wobei R im polymeren Molekül gleich oder verschieden sein kann und ein Alkylrest mit 1 bis 4 Kohlenstoffatomen oder ein Phenylrest ist und 0,4 bis 4 Gew.-% an Siliciumatome gebundene Hydroxylgruppen aufweist.

2. Mittel nach Anspruch 1, dadurch gekennzeichnet, daß es als Siliconharz ein Harz mit einem durchschnittlichen Molekulargewicht von 600 bis 5000 enthält.

## Claims

1. Lubricant and mould-release agent for the production of tyres, based on an aqueous silicone oil dispersion, which may contain polyalkylene glycols, ethers thereof, polysiloxy-polyoxyalkylene block copolymers, fillers having a leaf-like structure, dispersion aids and other conventional additives, characterised in that it contains, based on the silicone oil, 2 to 40% by weight of a solid silicone resin which is soluble in the silicone oil and essentially comprises $R_3SiO_{1/2}$ and $SiO_{4/2}$ units, where R in the polymeric molecule may be identical or different and is an alkyl radical having 1 to 4 carbon atoms or a phenyl radical, and 0.4 to 4% by weight of the silicon atoms have bonded hydroxyl groups.

2. Agent according to Claim 1, characterised in that it contains, as the silicone resin, a resin having a mean molecular weight of 600 to 5000.

## Revendications

1. Agent de glissement et de démoulage pour la fabrication de pneus, à base d'une dispersion aqueuse d'une huile de silicone qui peut contenir des polyalkylèneglycols, leurs éthers, des copolymères-blocs de polysiloxanepolyoxyalkylène, des charges à structure lamellaire, des agents auxiliaires de dispersion et d'autres adjuvants usuels, caractérisé en ce qu'il est composé, par rapport à l'huile de silicone, de 2 à 40 % en poids d'une résine silicone solide et soluble dans l'huile de silicone, ladite résine silicone étant essentiellement composée de motifs $R_3SiO_{1/2}$ et $SiO_{4/2}$, où les R peuvent être identiques ou différents dans la molécule polymère et représenter un groupe alkyle ayant de 1 à 4 atomes de carbone ou un groupe phényle, et comprenant de 0,4 à 4 % en poids de groupes hydroxyle liés à des atomes de silicium.

2. Agent selon la revendication 1, caractérisé en ce qu'il contient, comme résine silicone, une résine ayant un poids moléculaire moyen de 600 à 5.000.